# EUROPÄISCHE PATENTSCHRIFT

(11) **EP 3 550 171 B1**
(45) Veröffentlichungstag und Bekanntmachung des Hinweises auf die Patenterteilung: **17.06.2020**
(21) Anmeldenummer: 19161167.2
(22) Anmeldetag: 07.03.2019
(51) Int. Cl.: F16F 1/22, F16F 1/368

(54) **BLATTFEDEREINRICHTUNG FÜR EIN FAHRZEUG UND VERFAHREN ZUM HERSTELLEN EINER SOLCHEN BLATTFEDEREINRICHTUNG**
LEAF SPRING FOR A VEHICLE AND METHOD OF MANUFACTURING SUCH A LEAF SPRING
DISPOSITIF DE RESSORT À LAME POUR VÉHICULE ET PROCÉDÉ DE FABRICATION D'UN TEL DISPOSITIF DE RESSORT À LAME

(30) Priorität: 06.04.2018 DE 102018205218
(43) Veröffentlichungstag der Anmeldung: 09.10.2019
(73) Patentinhaber: ZF Friedrichshafen AG, 88046 Friedrichshafen (DE)
(72) Erfinder: Pleyer, Marcel, 49326 Melle (DE); Siddiqui, Sami Uddin, 49448 Lemförde (DE); Rupflin, Thomas, 88719 Stetten (DE); Wieber, Natalie, 97422 Schweinfurt (DE); Braun, Melanie, 97421 Schweinfurt (DE); Blankenspeck, Remt, 49406 Barnstorf (DE)
(74) Vertreter: ZF Friedrichshafen AG

(56) Entgegenhaltungen:
- WO-A1-2014/145585
- DE-A1-102016 215 938
- JP-A- S5 776 368
- JP-A- S61 144 437

## Beschreibung

Die Erfindung betrifft eine Blattfedereinrichtung für ein Fahrzeug mit einem ersten Federblatt und mit mindestens einem weiteren Federblatt, wobei das erste Federblatt und das weitere Federblatt zum Realisieren einer progressiven Federung zusammenwirken, wobei das erste Federblatt einen Aufnahmeraum aufweist und das weitere Federblatt in dem Aufnahmeraum angeordnet ist. Des Weiteren betrifft die Erfindung ein Verfahren zum Herstellen einer solchen Blattfedereinrichtung, wobei ein erstes Federblatt und mindestens ein weiteres Federblatt hergestellt werden, und das erste Federblatt und das weitere Federblatt zum Realisieren einer progressiven Federung und/oder Federkennlinie zusammenwirken und das erste Federblatt einen Aufnahmeraum aufweist und das weitere Federblatt in dem Aufnahmeraum angeordnet wird. Schließlich betrifft die Erfindung die Verwendung einer solchen Blattfedereinrichtung als eine Längsblattfeder oder eine Querblattfeder in einem Fahrwerk eines Fahrzeugs oder Kraftfahrzeugs.

Eine derartige Blattfedereinrichtung ist aus der WO 2014/145585 A1 bekannt. Hiernach wird ein gebogener Einleger in einen Aufnahmeraum eines Federblattes angeordnet.

Aus der DE 10 2016 215 938 A1 ist eine Blattfedereinrichtung bekannt, die aus einer oberen Decklage und einer unteren Decklage gebildet, wobei eine Aufdickung mittels Einleger zwischen den beiden Decklagen eingebracht wird.

Aus der DE 10 2010 015 951 A1 ist eine Blattfedereinrichtung bekannt, wobei ein progressiver Verlauf einer Kraft-Weg-Kennlinie ermöglicht ist, wenn eine Blattfedereinrichtung verwendet wird, die aus mehreren Federblättern zusammengesetzt ist, die jeweils in geeigneter Weise ausgestaltet und miteinander verbunden bzw. in einem Federblattverbund angeordnet sind.

Bei Blattfedereinrichtungen aus Metall ist es bekannt, mehrere Federblätter aus Metall verschiedener Länge und/oder Anzahl einzusetzen, um eine progressive Federung zu realisieren. Hierbei wirkt mindestens eines dieser Federblätter erst ab einem bestimmten bzw. vorgegebenen Federweg, wodurch die Steifigkeit der Blattfedereinrichtung erhöht wird. Eine derartige sich erhöhende Steifigkeit der Blattfedereinrichtung und/oder progressive Federung wird beispielsweise für Fahrzeuge bestimmter Gewichtsklassen oder Fahrzeuge mit hoher Zuladung gefordert. Hierdurch kann eine nahezu gleichbleibende Aufbaueigenfrequenz gewährleistet werden, die die Fahrsicherheit erhöht.

Bei einer mehrblättrigen Blattfedereinrichtung mit mindestens einem Federblatt aus einem faserverstärkten Kunststoff besteht die Gefahr, dass es im Bereich einer Anlage des Federblattes aus dem faserverstärkten Kunststoff mit dem mindestens einem weiteren Federblatt zu einer unerwünschten Beschädigung kommt. Insbesondere kann ein Eintrag von Schmutzpartikeln und/oder Abrieb im Bereich einer Kontaktfläche des Federblattes aus dem faserverstärkten Kunststoff mit dem weiteren Federblatt zu einer unerwünschten Beschädigung der Blattfedereinrichtung führen, wodurch die Betriebsfähigkeit gefährdet und/oder die Betriebsdauer der Blattfedereinrichtung reduziert sein kann. Somit ist eine sich erhöhende Steifigkeit und/oder eine progressive Federung bei einer mehrblättrigen Blattfedereinrichtung aus einem Faserkunststoffverbund, insbesondere Glasfaserkunststoff, nicht ohne Weiteres realisierbar.

Es ist die der Erfindung zu Grunde liegende Aufgabe, eine Blattfedereinrichtung und/oder ein Verfahren der eingangs genannten Art derart weiterzuentwickeln, dass bei Verwendung einer Blattfedereinrichtung mit mindestens einem Federblatt, insbesondere aus einem faserverstärkten Kunststoff, eine progressive Federung realisierbar ist und/oder die erforderliche Standfestigkeit im Betrieb gewährleistet werden kann. Vorzugsweise soll sich die Steifigkeit der Blattfedereinrichtung in Abhängigkeit vom Federweg und/oder Federbelastung erhöhen bzw. vergrößern. Insbesondere soll eine alternative Ausführungsform bereitgestellt werden.

Die der Erfindung zu Grunde liegende Aufgabe wird mit einer Blattfedereinrichtung nach Anspruch 1 und mittels eines Verfahrens nach Anspruch 12 gelöst. Bevorzugte Weiterbildungen der Erfindung finden sich in den Unteransprüchen und in der nachfolgenden Beschreibung.

Die Blattfedereinrichtung ist zum Einsatz in einem Fahrzeug und/oder Kraftfahrzeug ausgebildet. Insbesondere ist die Blattfedereinrichtung in einem Fahrwerk eines Fahrzeugs und/oder Kraftfahrzeugs angeordnet. Hierbei kann die Blattfedereinrichtung mit einer Achse, einer Starrachse, einer Radachse, einem Radträger und/oder einem Querlenker verbunden sein. Die Achse kann als eine Hinterachse oder als eine Vorderachse ausgebildet sein. Hierbei kann die Blattfedereinrichtung in Längsrichtung oder in Querrichtung zur Fahrzeuglängsachse angeordnet werden. Die Blattfedereinrichtung weist ein erstes Federblatt und mindestens ein weiteres Federblatt auf. Somit kann die Blattfedereinrichtung mindestens zwei oder mehr Federblätter aufweisen. Die Blattfedereinrichtung kann zweiblättrig oder mehrblättrig aufgebaut sein. Vorzugsweise ist das weitere Federblatt als ein zweites Federblatt ausgebildet. Insbesondere weist die Blattfedereinrichtung ein einziges erstes Federblatt und ein einziges zweites Federblatt auf. Hierbei wirken das erste Federblatt und das weitere Federblatt zum Realisieren einer progressiven Federung und/oder progressiven Federkennlinie zusammen. Insbesondere wird bei einer progressiven Federung und/oder Federkennlinie eine Steifigkeit der Blattfedereinrichtung ab einer vorgegebenen Federbelastung und/oder mit einer steigenden Federbelastung erhöht. Insbesondere kann mittels einer progressiven Federung bei einem ansteigenden Beladungszustand für ein Fahrzeug eine höhere bzw. ansteigende Federrate realisiert werden. Die Steifigkeit kann sich, insbesondere ab der vorgegebenen Federbelastung, kontinuierlich oder exponentiell erhöhen oder vergrößern.

Bei einer erfindungsgemäßen Blattfedereinrichtung weist das erste Federblatt einen Aufnahmeraum auf, wobei das weitere Federblatt in dem Aufnahmeraum angeordnet ist.

Hierbei ist von Vorteil, dass aufgrund der Ausbildung eines Aufnahmeraums in dem ersten Federblatt alternative Anordnungsmöglichkeiten für das weitere Federblatt ermöglicht sind. Im Unterschied zu üblichen Anordnungen bei einer mehrblättrigen Blattfedereinrichtung, bei der mindestens zwei Federblätter aufeinandergestapelt sind, ist hier das weitere Federblatt in dem Aufnahmeraum des ersten Federblattes angeordnet. Somit kann das weitere Federblatt innerhalb des ersten Federblattes angeordnet sein. Alternativ kann der Aufnahmeraum als ein Innenraum bezeichnet werden. Der Aufnahmeraum und/oder der Innenraum kann als ein vollständig geschlossener oder offener Raum ausgebildet sein.

In dem Aufnahmeraum und zwischen dem ersten Federblatt und dem weiteren Federblatt ist, insbesondere zumindest partiell oder mindestens teilweise, ein elastisches Material angeordnet. Somit liegen das erste Federblatt und das weitere Federblatt nicht unmittelbar aneinander. Hierdurch ist die Gefahr einer unerwünschten Beschädigung im Betrieb der Blattfedereinrichtung erheblich reduziert. Insbesondere sind das erste Federblatt und das weitere Federblatt aufgrund des elastischen Materials miteinander verbunden. Vorzugsweise liegt das elastische Material einerseits an einem Innenumfang und/oder einer Innenseite des Aufnahmeraums und andererseits an einem Außenumfang und/oder einer Außenseite des weiteren Federblattes, insbesondere zumindest teilweise, an. Das elastische Material kann fest mit dem Innenumfang des Aufnahmeraums und/oder fest mit dem Außenumfang des weiteren Federblattes verbunden sein. Vorzugsweise handelt es sich bei dem elastischen Material um ein Elastomermaterial. Bei einem Elastomermaterial kann es sich um einen elastisch verformbaren Kunststoff und/oder um ein elastisch verformbares Gummimaterial handeln. Somit kann als elastisches Material ein elastisches Kunststoffmaterial oder ein elastisches Gummimaterial verwendet werden. Insbesondere ist das elastische Material komprimierbar, beispielsweise als ein geschäumtes Elastomer, ausgebildet. Vorzugsweise ist das elastische Material inkompressibel bzw. nichtkomprimierbar. Das elastische Material und/oder das Elastomermaterial kann sich bei Zug- und/oder Druckbelastung elastisch verformen. Insbesondere kann das elastische Material nach einem Einwirken einer Kraft in seine Ausgangsform zurückkehren.

Nach einer weiteren Ausführungsform ist das erste Federblatt und/oder das weitere Federblatt aus einem faserverstärkten Kunststoff gebildet. Insbesondere ist das erste Federblatt und/oder das weitere Federblatt aus einem Glasfaserkunststoff hergestellt. Das erste Federblatt und/oder das weitere Federblatt können jeweils aus mehreren Faserlagen gebildet sein. Insbesondere sind die Faserlagen mittels eines Matrixmaterials getränkt und/oder miteinander verbunden. Vorzugsweise sind das erste Federblatt und das weitere Federblatt jeweils als ein Faserkunststoffverbund realisiert. Das erste Federblatt kann aus einem ersten faserverstärkten Kunststoff und das weitere Federblatt aus einem von dem ersten faserverstärkten Kunststoff abweichendem weiteren faserverstärkten Kunststoff gebildet sein. Somit können je nach Bedarf und/oder der gewünschten progressiven Federungseigenschaft der Blattfedereinrichtung unterschiedliche geeignete Materialien miteinander kombiniert werden. Insbesondere sind der erste faserverstärkte Kunststoff, der weitere faserverstärkte Kunststoff und/oder ein elastisches Material zum Realisieren einer vorgegebenen Federkennlinie, vorzugsweise einer vorgegebenen progressiven Federung, aufeinander abgestimmt ausgebildet und/oder ausgewählt. Die Verwendung von faserverstärktem Kunststoff für die Ausbildung des ersten Federblattes, des weiteren Federblattes und/oder der Blattfedereinrichtung ermöglichen, insbesondere im Vergleich mit einer Blattfedereinrichtung aus metallenen Federblättern, eine Gewichtseinsparung.

Gemäß einer weiteren auch eigenständig und unabhängig von der vorliegenden Anmeldung denkbaren Ausführungsform kann entweder das erste Federblatt oder das weitere Federblatt aus einem faserverstärkten Kunststoff hergestellt sein. Das jeweils andere Federblatt kann aus einem anderen Material, insbesondere aus keinem faserverstärkten Kunststoff, hergestellt sein. Bei dem anderen Material kann es sich beispielsweise um ein Metall handeln.

Vorzugsweise sind das erste Federblatt, das weitere Federblatt und das elastische Material zum Realisieren einer progressiven Federung und/oder einer progressiven Federkennlinie ausgebildet, wobei ausgehend von einem unbelasteten Zustand der Blattfedereinrichtung das elastische Material mit steigender Federbelastung zunehmend verformt und hierdurch zunehmend das weitere Federblatt belastet ist. Insbesondere wird das elastische Material bei einer ansteigenden Federbelastung zunehmend verformt, komprimiert und/oder kompaktiert. Hierauf folgend, insbesondere ab einer vorgegebenen Federbelastung und/oder einwirkenden Federkraft, oder gleichzeitig wird zunehmend das weitere Federblatt belastet, wodurch die Blattfedereinrichtung mit steigender Federbelastung zunehmend steifer wird. Somit kann die Steifigkeit der Blattfedereinrichtung mit ansteigender Federbelastung erhöht werden. Hierdurch ist eine progressive Federung und/oder Federkennlinie realisierbar. Insbesondere bewirkt das elastische Material, vorzugsweise bis zu einer vorgegebenen Federbelastung und/oder einwirkenden Federkraft, eine mindestens teilweise Entkopplung des ersten Federblattes von dem weiteren Federblatt. Bis zum Erreichen der vorgegebenen Federbelastung und/oder einwirkenden Federkraft kann eine Biegebelastung nicht oder nur teilweise von dem ersten Federblatt über das elastische Material an das weitere Federblatt übertragen werden. Erst ab der vorgegebenen Federbelastung und/oder einwirkenden Federkraft kann das weitere Federblatt entsprechend dem ersten Federblatt auf Biegung belastet werden. Insbesondere kann das elastische Material ab der vorgegebenen Federbelastung und/oder einwirkenden Federkraft nicht weiter verformt werden, sondern bei abnehmender Federbelastung und/oder einwirkenden Federkraft nur noch aus einem maximal verformten Zustand in Richtung seiner Ausgangsform zurückkehren.

Gemäß einer Weiterbildung ist das weitere Federblatt und/oder ein elastisches Material vollständig innerhalb des ersten Federblattes, insbesondere in dem Aufnahmeraum, angeordnet. Der Aufnahmeraum kann als ein Hohlraum in dem ersten Federblatt ausgebildet sein. Der Aufnahmeraum des ersten Federblattes kann mittels des weiteren Federblattes und/oder des elastischen Materials teilweise oder vollständig ausgefüllt sein. Das weitere Federblatt und/oder das elastische Material können vollständig von dem ersten Federblatt umgeben sein. Insbesondere kann das weitere Federblatt vollständig von dem elastischen Material umgeben oder eingeschlossen sein. Hierdurch ist das weitere Federblatt zuverlässig vor Umwelteinflüssen geschützt.

Vorzugsweise ist der Aufnahmeraum als eine Durchgangsöffnung ausgebildet. Die Durchgangsöffnung kann sich von einer ersten Seite des ersten Federblattes bis zu einer von der ersten Seite abgewandten zweiten Seite des ersten Federblattes erstrecken. Insbesondere erstreckt sich der Aufnahmeraum in einem in dem Fahrzeug und/oder in einem Fahrwerk montierten Zustand der Blattfedereinrichtung quer oder rechtwinklig zu einer Fahrzeughochachse. Die Durchgangsöffnung kann mittels des weiteren Federblattes und/oder des elastischen Materials teilweise oder vollständig ausgefüllt sein. Das erste Federblatt und das weitere Federblatt können dieselbe Breite aufweisen. Insbesondere ist das weitere Federblatt und/oder das elastische Material von außen sichtbar. Mit zunehmender Federbelastung kann das elastische Material in Längsrichtung der Durchgangsöffnung verformt, gedrückt und/oder gedrängt werden. Hierbei kann das elastische Material teilweise aus der Durchgangsöffnung heraustreten und/oder herausquellen.

Vorzugsweise ist das erste Federblatt und/oder das weitere Federblatt spiegelsymmetrisch zu einer Mittelebene ausgebildet. Hierbei kann sich die Mittelebene rechtwinklig zu einer Längsachse bzw. Längserstreckung der Blattfedereinrichtung und/oder einer Fahrzeuglängsachse erstrecken. Alternativ kann sich die Mittelebene parallel zur einer Längsachse bzw. Längserstreckung der Blattfedereinrichtung und/oder einer Fahrzeuglängsachse erstrecken. Insbesondere ist die Mittelebene in einem montierten Zustand der Blattfedereinrichtung in einem Fahrwerk und/oder in einem Fahrzeug vertikal und/oder in Richtung einer Hochachse ausgerichtet. Somit kann die Mittelebene in einer Vertikalebene und/oder Hochachsebene liegen bzw. die Mittelebene kann mit einer Vertikalebene und/oder Hochachsebene zusammen fallen. Die Längsachse der Blattfedereinrichtung kann durch zwei voneinander abgewandte endseitige Befestigungseinrichtungen zum Befestigen der Blattfedereinrichtung an einem Fahrzeugträger, Fahrzeugschemel, Fahrzeugrahmen und/oder Fahrzeugaufbau verlaufen. Insbesondere dienen zwei voneinander abgewandte endseitige Befestigungseinrichtungen als Lager für die Blattfedereinrichtung. Des Weiteren kann die Blattfedereinrichtung in einem Mittelbereich, insbesondere mittig zwischen den beiden endseitigen Befestigungseinrichtungen, mit einer Achse verbunden sein. Diese Achse kann als eine Radachse und/oder Starrachse ausgebildet sein. Insbesondere erstreckt sich die Achse in einem montierten Zustand in einem Fahrzeug und/oder in einem Fahrwerk in eine Richtung quer oder rechtwinklig zur Fahrzeuglängsachse.

Nach einer weiteren Ausführungsform weist das erste Federblatt, das weitere Federblatt und/oder der Aufnahmeraum, insbesondere in einem unbelasteten Zustand der Blattfedereinrichtung, eine gekrümmte oder gebogene Gestalt auf. Insbesondere ist die gekrümmte oder gebogene Gestalt in Richtung einer mit der Blattfedereinrichtung verbundenen Achse gerichtet.

Gemäß einer Weiterbildung weist der Aufnahmeraum, insbesondere in einem unbelasteten Zustand der Blattfedereinrichtung, eine konvex gebogene Innenseite und eine konkav gebogene Innenseite auf. Hierbei kann die konvex gebogene Innenseite als eine erste Innenseite und die konkav gebogene Innenseite als eine zweite Innenseite des Aufnahmeraumes angesehen werden. Die konvex gebogene Innenseite und die konkav gebogene Innenseite können sich in Längsrichtung des ersten Federblattes erstrecken. Die konvex gebogene Innenseite und die konkav gebogene Innenseite können in endseitigen, insbesondere voneinander abgewandten, Abschnitten des Aufnahmeraumes ineinander übergehen. Vorzugsweise sind die konvex gebogene Innenseite und die konkav gebogene Innenseite einander gegenüberliegend und/oder einander zugewandt angeordnet.

Der unbelastete Zustand der Blattfedereinrichtung kann sich auf einen unmontierten Zustand der Blattfedereinrichtung bezüglich der Montage in einem Fahrwerk und/oder Fahrzeug beziehen. Alternativ kann sich der unbelastete Zustand der Blattfedereinrichtung auf einem in einem Fahrzeug und/oder Fahrwerk montierten Zustand der Blattfederreinrichtung beziehen, wobei auf die Blattfedereinrichtung eine Federbelastung wirkt, die maximal der Federbelastung in einem Leerzustand oder in einem unbeladenen Zustand des Fahrzeugs entspricht.

Nach einer weiteren Ausführungsform sind zwei voneinander abgewandte Endbereiche des weiteren Federblattes, insbesondere in einem unbelasteten Zustand der Blattfedereinrichtung, mit einem geringeren Abstand zu der konkav gebogenen Innenseite als zu der konvex gebogenen Innenseite angeordnet. Hierbei kann ein erster Endbereich des weiteren Federblattes einem ersten Ende des ersten Federblattes und ein zweiter Endbereich des weiteren Federblattes einem zweiten Ende des ersten Federblattes zugewandt sein. Aufgrund einer geeigneten Anordnung und/oder Ausbildung des weiteren Federblattes in dem Aufnahmeraum des ersten Federblattes können die Federungseigenschaften der Blattfedereinrichtung beeinflusst, vorgegeben oder eingestellt werden.

Vorzugsweise ist ein Mittelbereich des weiteren Federblattes, insbesondere in einem unbelasteten Zustand der Blattfedereinrichtung, mit einem geringeren Abstand zu der konvex gebogenen Innenseite als zu der konkav gebogenen Innenseite angeordnet. Somit kann der Abstand zwischen dem Innenumfang des Aufnahmeraums des ersten Federblattes und dem Außenumfang des weiteren Federblattes über die Längserstreckung der Blattfedereinrichtung unterschiedlich ausgebildet sein. In einer alternativen Ausführungsform kann der Abstand zwischen dem Innenumfang des Aufnahmeraums und dem Außenumfang des weiteren Federblattes konstant und/oder über die Länge des weiteren Federblattes gleich groß ausgebildet sein. Insbesondere ist der Abstand zwischen dem Innenumfang des Aufnahmeraums und dem Außenumfang des weiteren Federblattes mittels des elastischen Materials vollständig oder teilweise ausgefüllt. Insbesondere ist der Mittelbereich mittig zwischen zwei Endbereichen des weiteren Federblattes angeordnet.

Gemäß dem Verfahren zum Herstellen einer erfindungsgemäßen Blattfedereinrichtung werden ein erstes Federblatt und mindestens ein weiteres Federblatt, insbesondere jeweils aus einem faserverstärkten Kunststoff, hergestellt. Hierbei wirken das erste Federblatt und das weitere Federblatt zum Realisieren einer progressiven Federung und/oder einer progressiven Federkennlinie zusammen. Hierbei wird das erste Federblatt derart ausgebildet, dass dieses einen Aufnahmeraum aufweist und das weitere Federblatt in dem Aufnahmeraum angeordnet wird.

Vorzugsweise wird in dem Aufnahmeraum und zwischen dem ersten Federblatt und dem weiteren Federblatt ein elastisches Material, vorzugsweise ein Elastomermaterial, angeordnet. Insbesondere werden das erste Federblatt, das weitere Federblatt und das elastische Material lagenartig und/oder schichtartig hergestellt. Vorzugsweise wird die Blattfedereinrichtung schichtartig und/oder lagenartig aufgebaut und/oder hergestellt. Somit kann die Blattfedereinrichtung selbst bzw. als Ganzes schichtweise realisiert und/oder aufgebaut werden. Hierbei kann zunächst ein erster und/oder unterster Teilbereich des ersten Federblattes aufgebaut und/oder hergestellt werden. Anschließend wird ein erster und/oder unterster Teilbereich des elastischen Materials auf den ersten und/oder untersten Teilbereich des ersten Federblattes aufgebaut und/oder hergestellt. Sodann kann das weitere Federblatt auf dem ersten und/oder untersten Teilbereich des elastischen Materials aufgebaut und/oder hergestellt werden. Anschließend kann ein weiterer und/oder oberster Teilbereich des elastischen Materials auf dem weiteren Federblatt aufgebaut und/oder hergestellt werden. Hiernach kann ein weiterer und/oder oberster Teilbereich des ersten Federblattes auf dem weiteren und/oder obersten Teilbereich des elastischen Materials aufgebaut und/oder hergestellt werden. Parallel und/oder gleichzeitig zum Aufbauen bzw. Herstellen der elastischen Materialbereiche und/oder des weiteren Federblattes können Endbereiche des ersten Federblattes aufgebaut und/oder hergestellt werden. Mittels dieser Endbereiche können ein erstes Ende und ein zweites Ende des ersten Federblattes realisiert werden. Nach dem Aufbau der Blattfedereinrichtung kann ein faserverstärkter Kunststoff des ersten Federblattes und des weiteren Federblattes mittels eines geeigneten Verfahrens konsolidiert und/oder ausgehärtet werden. Hierbei kann es sich beispielsweise um ein RTM-Verfahren handeln (RTM: Resin Transfer Moulding).

Gemäß einer weiteren Ausführungsform werden zunächst das erste Federblatt und das weitere Federblatt hergestellt. Hierbei kann als erstes das erste Federblatt und anschließend das weitere Federblatt hergestellt werden. Alternativ kann zunächst das weitere Federblatt und anschließend das erste Federblatt hergestellt werden. Nach einer weiteren Alternative können das erste Federblatt und das weitere Federblatt gleichzeitig oder parallel, insbesondere unabhängig voneinander, hergestellt werden. Hiernach folgend wird das elastische Material zwischen einem Innenumfang des Aufnahmeraums und einem Außenumfang des weiteren Federblattes zum Verbinden des ersten Federblattes mit dem weiteren Federblatt eingebracht. Alternativ kann nach dem Herstellen des weiteren Federblattes zunächst das elastische Material auf den Außenumfang des weiteren Federblattes aufgebracht werden. Anschließend kann das erste Federblatt hergestellt werden, so dass der Innenumfang des Aufnahmeraums des ersten Federblattes an dem elastischen Material anliegt. Alternativ kann zunächst das weitere Federblatt, insbesondere aus einzelnen Faserlagen oder Faserverbundlagen, hergestellt werden. Anschließend wird das elastische Material an dem weiteren Federblatt angeordnet. Das elastische Material kann als ein Elastomereinleger ausgebildet sein. Nach dem Anordnen des elastischen Materials kann das erste Federblatt, insbesondere aus einzelnen Faserlagen oder Faserbundlagen, hergestellt werden. Hierdurch ist ein kontinuierlicher, insbesondere lagenartiger oder schichtartiger, Aufbau der Blattfedereinrichtung ermöglicht. Gemäß einer weiteren Alternative können das erste Federblatt, das weitere Federblatt und das elastische Material gleichzeitig oder parallel, insbesondere unabhängig voneinander, hergestellt werden.

Von besonderem Vorteil ist die Verwendung einer erfindungsgemäßen Blattfedereinrichtung als eine Längsblattfeder oder eine Querblattfeder in einem Fahrwerk eines Fahrzeugs oder Kraftfahrzeugs.

Insbesondere handelt es sich bei der gemäß dem erfindungsgemäßen Verfahren hergestellten Blattfedereinrichtung um eine zuvor beschriebene erfindungsgemäße Blattfedereinrichtung. Vorzugsweise ist das Verfahren gemäß allen im Zusammenhang mit der hier beschriebenen erfindungsgemäßen Blattfedereinrichtung erläuterten Ausgestaltungen weitergebildet. Ferner kann die hier beschriebene Blattfedereinrichtung gemäß allen im Zusammenhang mit den Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine perspektivische Ansicht einer erfindungsgemäßen Blattfedereinrichtung,
- Fig. 2: eine Seitenansicht der erfindungsgemäßen Blattfedereinrichtung gemäß Fig. 1,
- Fig. 3: einen Ausschnitt der Seitenansicht der erfindungsgemäßen Blattfedereinrichtung gemäß Fig. 2, und
- Fig. 4: einen Querschnitt der erfindungsgemäßen Blattfedereinrichtung gemäß Fig. 3.

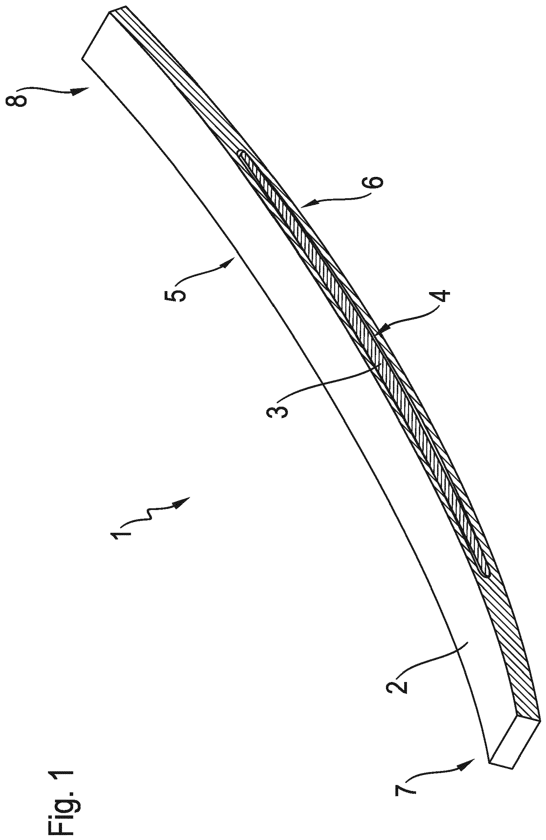

Figur 1 zeigt eine perspektivische Ansicht einer erfindungsgemäßen Blattfedereinrichtung 1. Die Blattfedereinrichtung 1 weist ein erstes Federblatt 2 und ein weiteres Federblatt 3 auf. Bei diesem Ausführungsbeispiel ist das weitere Federblatt 3 als ein zweites Federblatt ausgebildet. Insgesamt weist die Blattfedereinrichtung 1 somit zwei Federblätter, nämlich das erste Federblatt 2 und das weitere Federblatt 3 auf. Das erste Federblatt 2 und das weitere Federblatt 3 sind jeweils aus einem faserverstärkten Kunststoff, bei diesem Ausführungsbeispiel aus einem Glasfaserkunststoff, gebildet. Das weitere Federblatt 3 ist in Bezug auf die Längserstreckung der Blattfedereinrichtung 1 kürzer ausgebildet als das erste Federblatt 2. Sowohl das erste Federblatt 2 als auch das weitere Federblatt 3 sind gemäß diesem Beispiel, insbesondere in einem unbelasteten Zustand, gebogen ausgebildet. Das weitere Federblatt 3 ist in einem Aufnahmeraum 4 des ersten Federblattes 2 angeordnet. Somit ist das weitere Federblatt 3 innerhalb des ersten Federblattes 2 angeordnet bzw. in das erste Federblatt 2 integriert.

Bei diesem Ausführungsbeispiel ist der Aufnahmeraum 4 als eine Durchgangsöffnung in dem ersten Federblatt 2 ausgebildet. Der Aufnahmeraum 4 erstreckt sich von einer ersten Seite 5 des ersten Federblattes bis zu einer von der ersten Seite 5 abgewandten zweiten Seite 6 des ersten Federblattes 2. Bei diesem Ausführungsbeispiel ist die Blattfedereinrichtung 1 als eine Längsblattfeder ausgebildet. Somit erstreckt sich der Aufnahmeraum 4 oder eine Längsachse der den Aufnahmeraum 4 bildenden Durchgangsöffnung in einem hier nicht näher dargestellten montierten Zustand der Blattfedereinrichtung 1 in einem Fahrzeug und/oder in einem Fahrwerk quer bzw. rechtwinklig zu einer Fahrzeughochachse.

Das erste Federblatt 2 weist ein erstes Ende 7 und ein von dem ersten Ende 7 abgewandtes zweites Ende 8 auf. Die beiden Enden 7, 8 sind als freie Enden ausgebildet. Die Blattfedereinrichtung 1 kann mittels zweier voneinander abgewandter, jeweils im Bereich des Endes 7 bzw. 8 angeordneter und hier nicht näher dargestellter Befestigungseinrichtungen an einem Fahrzeugträger, Fahrzeugrahmen und/oder Fahrzeugaufbau befestigt sein.

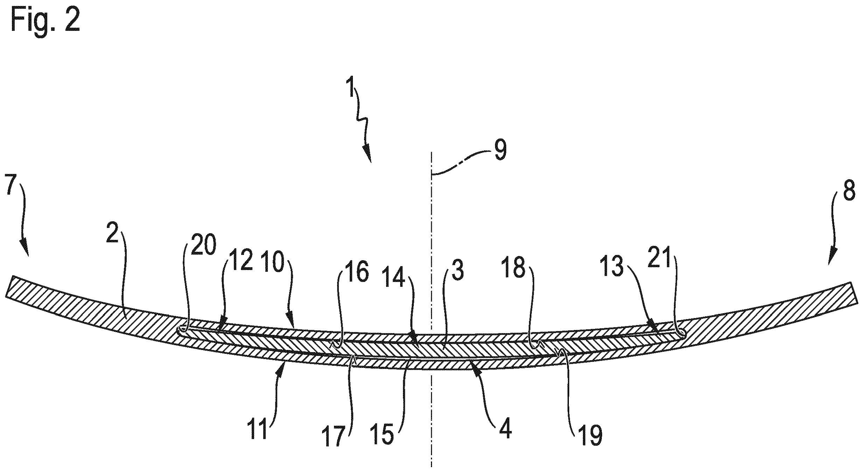

Figur 2 zeigt eine Seitenansicht der erfindungsgemäßen Blattfedereinrichtung 1 gemäß Figur 1. Das Federblatt 2, das weitere Federblatt 3 und der Aufnahmeraum 4 sind spiegelsymmetrisch zu einer Mittelebene 9 ausgebildet. Die Mittelebene 9 ist in einem montierten Zustand der Blattfedereinrichtung 1 vertikal ausgerichtet. Bei diesem Ausführungsbeispiel erstreckt sich des Weiteren die Mittelebene 9 rechtwinklig zur Längserstreckung der Blattfedereinrichtung 1. Alternativ kann sich eine Mittelebene ausschließlich parallel zur Längserstreckung der Blattfedereinrichtung 1 erstrecken. Bei der Ausbildung der Blattfedereinrichtung 1 als eine Längsblattfeder erstreckt sich die Mittelebene 9 in dem montierten Zustand zudem rechtwinklig zu einer Fahrzeuglängsachse. Des Weiteren ist die erste Blattfedereinrichtung 1 gebogen ausgebildet. Hierdurch weist die Blattfedereinrichtung 1 bzw. das erste Federblatt 2 eine konkave Außenseite 10 und eine konvexe Außenseite 11 auf.

Das weitere Federblatt 3 weist einen ersten Endbereich 12 und einen hiervon abgewandten zweiten Endbereich 13 auf. Hierbei ist der erste Endbereich 12 dem ersten Ende 7 des ersten Federblattes 2 und der zweite Endbereich 13 dem zweiten Ende 8 des ersten Federblattes 2 zugewandt, jedoch jeweils von diesem Ende 7, 8 beabstandet. Mittig zwischen den beiden Endbereichen 12, 13 weist das weitere Federblatt 3 einen Mittelbereich 14 auf.

Zwischen dem ersten Federblatt 2 und dem weiteren Federblatt 3 ist ein elastisches Material 15 angeordnet. Bei diesem Ausführungsbeispiel ist das elastische Material 15 als ein Elastomermaterial ausgebildet. Das elastische Material 15 kontaktiert einerseits einen Innenumfang 16 des Aufnahmeraums 4 und andererseits einen Außenumfang 17 des weiteren Federblattes 3.

Der Innenumfang 16 ist mittels einer konvex gebogenen Innenseite 18, einer konkav gebogenen Innenseite 19 und die beiden Innenseiten 18, 19 miteinander verbindenden endseitigen Abschnitten 20, 21 des Aufnahmeraums 4 gebildet.

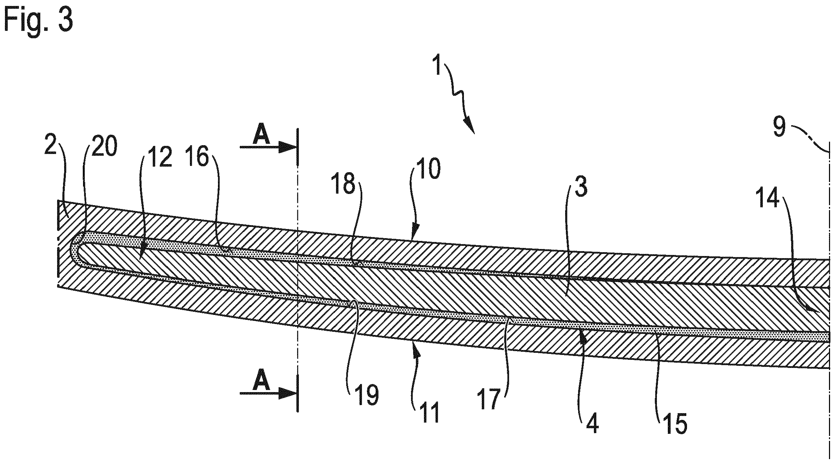

Figur 3 zeigt einen Ausschnitt der Seitenansicht der erfindungsgemäßen Blattfedereinrichtung 1 gemäß Figur 2. In dem hier dargestellten unbelasteten Zustand der Blattfedereinrichtung 1 ist der erste Endbereich 12 des weiteren Federblattes 3 mit einem geringeren Abstand zu der konkav gebogenen Innenseite 19 als zu der konvex gebogenen Innenseite 18 angeordnet. Eine analoge Anordnung ergibt sich für den spiegelsymmetrisch ausgebildeten Endbereich 13 gemäß Figur 2.

Des Weiteren ist in dem hier gezeigten unbelasteten Zustand der Blattfedereinrichtung 1 der Mittelbereich 14 mit einem geringeren Abstand zu der konvex gebogenen Innenseite 18 als zu der konkav gebogenen Innenseite 19 angeordnet. Hierdurch ist in den Bereichen mit einem größeren Abstand zwischen dem Außenumfang 17 des weiteren Federblattes 3 und dem Innenumfang 16 des ersten Federblattes 2 mehr elastisches Material 15 angeordnet als in den Bereichen mit einem geringeren Abstand.

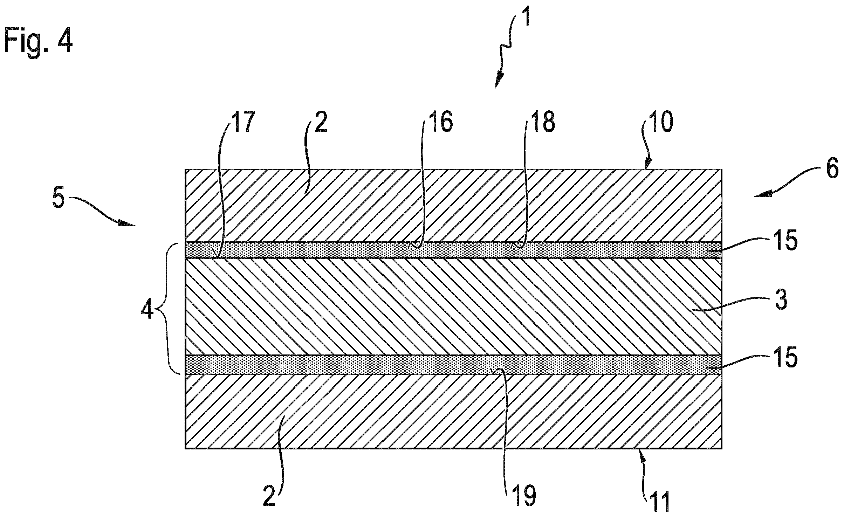

Figur 4 zeigt einen Querschnitt A-A der erfindungsgemäßen Blattfedereinrichtung 1 gemäß Figur 3. Gut zu erkennen ist, dass der Aufnahmeraum 4 als eine Durchgangsöffnung ausgebildet ist, der sich von der ersten Seite 5 bis zur zweiten Seite 6 des ersten Federblattes 2 erstreckt. Bei diesem Ausführungsbeispiel ist der Aufnahmeraum vollständig mittels des weiteren Federblattes 3 und dem elastischen Material 15 ausgefüllt. Hierbei schließt das weitere Federblatt 3 und das elastische Material 15 bündig mit der Seite 5 bzw. 6 ab. Alternativ kann das elastische Material eine nach innen weisende oder konkave Einbauchung aufweisen.

Ausgehend von dem unbelasteten Zustand gemäß Figuren 1 bis 4 wird das elastische Material 15 mit steigender Federbelastung zunehmend verformt und hierauf folgend oder zugleich zunehmend das weitere Federblatt 3 belastet. Hierbei wirkt die Federbelastung von der konvexen Außenseite 10 in Richtung der konkaven Außenseite 11. In einem montierten Zustand der Blattfedereinrichtung 1 ist die Federbelastung in vertikaler Richtung von unten nach oben bzw. Richtung der Fahrzeughochachse gerichtet.

Aufgrund der Zusammenwirkung des ersten Federblattes 2, des weiteren Federblattes 3 und des elastischen Materials 15 ist mit der Blattfedereinrichtung 1 eine progressive Federung bzw. progressive Federkennlinie realisierbar. Hierbei wird aufgrund des elastischen Materials 15 zwischen den beiden Federblättern 2, 3 eine Beschädigung der aus einem faserverstärkten Kunststoff gebildeten Federblätter 2, 3 vermieden.

Für ein gewünschtes Federungsverhalten der Blattfedereinrichtung 1 können das erste Federblatt 2, das weitere Federblatt 3, der Aufnahmeraum 4 und/oder das elastische Material 15 auf geeignete Weise ausgebildet bzw. angepasst werden. Diese Ausbildung bzw. Anpassung kann die Gestalt, die Kontur oder Materialeigenschaften betreffen.

### Bezugszeichen

- 1: Blattfedereinrichtung
- 2: erstes Federblatt
- 3: weiteres Federblatt
- 4: Aufnahmeraum
- 5: erste Seite
- 6: zweite Seite
- 7: erstes Ende
- 8: zweites Ende
- 9: Mittelebene
- 10: konkave Außenseite
- 11: konvexe Außenseite
- 12: erster Endbereich
- 13: zweiter Endbereich
- 14: Mittelbereich
- 15: elastisches Material
- 16: Innenumfang
- 17: Außenumfang
- 18: konvexe Innenseite
- 19: konkave Innenseite
- 20: endseitiger Abschnitt
- 21: endseitiger Abschnitt

## Patentansprüche

1. Blattfedereinrichtung für ein Fahrzeug mit einem ersten Federblatt (2) und mit mindestens einem weiteren Federblatt (3), wobei das erste Federblatt (2) und das weitere Federblatt (3) zum Realisieren einer progressiven Federung zusammenwirken, wobei das erste Federblatt (2) einen Aufnahmeraum (4) aufweist und das weitere Federblatt (3) in dem Aufnahmeraum (4) angeordnet ist, **dadurch gekennzeichnet, dass** in dem Aufnahmeraum (4) und zwischen dem ersten Federblatt (2) und dem weiteren Federblatt (3) ein elastisches Material (15) angeordnet ist.

2. Blattfedereinrichtung nach Anspruch 1, **dadurch gekennzeichnet, dass** das elastische Material (15) einerseits an einem Innenumfang (16) des Aufnahmeraums (4) und andererseits an einem Außenumfang (17) des weiteren Federblattes (3) anliegt.

3. Blattfedereinrichtung nach einem der Ansprüche 1 oder 2, **dadurch gekennzeichnet, dass** das erste Federblatt (2) und/oder das weitere Federblatt (3) aus einem faserverstärktem Kunststoff gebildet ist, insbesondere ist das erste Federblatt (2) aus einem ersten faserverstärkten Kunststoff und das weitere Federblatt (3) aus einem von dem ersten faserverstärkten Kunststoff abweichendem weiteren faserverstärkten Kunststoff gebildet, vorzugsweise sind der erste faserverstärkte Kunststoff, der weitere faserverstärkte Kunststoff und/oder ein elastisches Material zum Realisieren einer vorgegebenen Federkennlinie aufeinander abgestimmt ausgebildet und/oder ausgewählt.

4. Blattfedereinrichtung nach Anspruch 2 oder 3, **dadurch gekennzeichnet, dass** das erste Federblatt (2), das weitere Federblatt (3) und das elastische Material (15) zum Realisieren einer progressiven Federung und/oder Federkennlinie ausgebildet sind, wobei ausgehend von einem unbelasteten Zustand der Blattfedereinrichtung (1) das elastische Material (15) mit steigender Federbelastung zunehmend verformt und/oder komprimiert und hierdurch zunehmend das weitere Federblatt (3) belastet ist.

5. Blattfedereinrichtung nach einem der vorhergehenden Ansprüche, **dadurch gekennzeichnet, dass** das weitere Federblatt (3) und/oder ein elastisches Material (15) vollständig innerhalb des ersten Federblattes (2) angeordnet ist, insbesondere ist der Aufnahmeraum (4) als ein Hohlraum in dem ersten Federblatt (2) ausgebildet, vorzugsweise ist das weitere Federblatt (3) und/oder das elastische Material (15) vollständig von dem ersten Federblatt (2) umgeben.

6. Blattfedereinrichtung nach einem der vorhergehenden Ansprüche, **dadurch gekennzeichnet, dass** sich der Aufnahmeraum (4) als eine Durchgangsöffnung von einer ersten Seite (5) des ersten Federblattes (2) bis zu einer von der ersten Seite (5) abgewandten zweiten Seite (6) des ersten Federblattes (2) erstreckt, insbesondere erstreckt sich der Aufnahmeraum (4) in einem in dem Fahrzeug montierten Zustand der Blattfedereinrichtung (1) quer oder rechtwinklig zu einer Fahrzeughochachse.

7. Blattfedereinrichtung nach einem der vorhergehenden Ansprüche, **dadurch gekennzeichnet, dass** das erste Federblatt (2) und/oder das weitere Federblatt (3) spiegelsymmetrisch zu einer Mittelebene (9) ausgebildet ist, vorzugsweise erstreckt sich die Mittelebene (9) parallel oder rechtwinklig zu einer Längsachse der Blattfedereinrichtung (1), insbesondere verläuft die Längsachse der Blattfedereinrichtung (1) durch zwei voneinander abgewandte, endseitige Befestigungseinrichtungen zum Befestigen der Blattfedereinrichtung (1) an einem Fahrzeugträger und/oder Fahrzeugaufbau.

8. Blattfedereinrichtung nach einem der vorhergehenden Ansprüche, **dadurch gekennzeichnet, dass** das erste Federblatt (2), das weitere Federblatt (3) und/oder der Aufnahmeraum (4), insbesondere in einem unbelasteten Zustand der Blattfedereinrichtung (1), eine gekrümmte oder gebogene Gestalt aufweist.

9. Blattfedereinrichtung nach einem der vorhergehenden Ansprüche, **dadurch gekennzeichnet, dass** der Aufnahmeraum (4), insbesondere in einem unbelasteten Zustand der Blattfedereinrichtung (1), eine konvex gebogene Innenseite (18) und eine konkav gebogene Innenseite (19) aufweist, wobei sich die konvex gebogene Innenseite (18) und die konkav gebogene Innenseite (19) in Längsrichtung des ersten Federblattes (2) erstrecken, vorzugsweise sind die konvex gebogene Innenseite (18) und die konkav gebogene Innenseite (19) einander gegenüberliegend und/oder einander zugewandt angeordnet.

10. Blattfedereinrichtung nach Anspruch 9, **dadurch gekennzeichnet, dass** zwei voneinander abgewandte Endbereiche (12, 13) des weiteren Federblattes (3), insbesondere in einem unbelasteten Zustand der Blattfedereinrichtung (1), mit einem geringeren Abstand zu der konkav gebogenen Innenseite (19) als zu der konvex gebogenen Innenseite (18) angeordnet sind, vorzugsweise sind ein erster Endbereich (12) des weiteren Federblattes (3) einem ersten Ende (7) des ersten Federblattes (2) und ein zweiter Endbereich (13) des weiteren Federblattes (3) einem zweiten Ende (8) des ersten Federblattes (2) zugewandt.

11. Blattfedereinrichtung nach Anspruch 9 oder 10, **dadurch gekennzeichnet, dass** ein Mittelbereich (14) des weiteren Federblattes (3), insbesondere in einem unbelasteten Zustand der Blattfedereinrichtung (1), mit einem geringeren Abstand zu der konvex gebogenen Innenseite (18) als zu der konkav gebogenen Innenseite (19) angeordnet ist, vorzugsweise ist der Mittelbereich (14) mittig zwischen zwei Endbereichen (12, 13) des weiteren Federblattes (3) angeordnet.

12. Verfahren zum Herstellen einer Blattfedereinrichtung nach einem der vorhergehenden Ansprüche, wobei ein erstes Federblatt (2) und mindestens ein weiteres Federblatt (3) hergestellt werden, das erste Federblatt (2) und das weitere Federblatt (3) zum Realisieren einer progressiven Federung und/oder Federkennlinie zusammenwirken, und das erste Federblatt (2) einen Aufnahmeraum (4) aufweist und das weitere Federblatt (3) in dem Aufnahmeraum (4) angeordnet wird, wobei in dem Aufnahmeraum und zwischen dem ersten Federblatt (2) und dem weiteren Federblatt (3) ein elastisches Material (15) angeordnet wird.

13. Verfahren nach Anspruch 12, **dadurch gekennzeichnet, dass** das erste Federblatt (2), das weitere Federblatt (3) und das elastische Material (15) lagenartig und/oder schichtartig hergestellt werden, vorzugsweise wird die Blattfedereinrichtung (1) schichtartig und/oder lagenartig aufgebaut und/oder hergestellt.

14. Verwendung einer Blattfedereinrichtung (1) nach einem der Ansprüche 1 bis 11 als eine Längsblattfeder oder eine Querblattfeder in einem Fahrwerk eines Fahrzeugs oder Kraftfahrzeugs.

## Claims

1. Leaf spring device for a vehicle, having a first spring leaf (2) and at least one further spring leaf (3), wherein the first spring leaf (2) and the further spring leaf (3) interact in order to realize a progressive spring arrangement, wherein the first spring leaf (2) has a receiving space (4) and the further spring leaf (3) is arranged in the receiving space (4), **characterized in that** an elastic material (15) is arranged in the receiving space (4) and between the first spring leaf (2) and the further spring leaf (3).

2. Leaf spring device according to Claim 1, **characterized in that** the elastic material (15) lies at one side against an inner periphery (16) of the receiving space (4) and at the other side against an outer periphery (17) of the further spring leaf (3).

3. Leaf spring device according to either of Claims 1 and 2, **characterized in that** the first spring leaf (2) and/or the further spring leaf (3) is formed from a fibre-reinforced plastic, and in particular the first spring leaf (2) is formed from a first fibre-reinforced plastic and the further spring leaf (3) is formed from a further fibre-reinforced plastic which differs from the first fibre-reinforced plastic, and preferably the first fibre-reinforced plastic, the further fibre-reinforced plastic and/or an elastic material are configured and/or selected in a manner coordinated with one another in order to realize a predefined spring characteristic curve.

4. Leaf spring device according to Claim 2 or 3, **characterized in that** the first spring leaf (2), the further spring leaf (3) and the elastic material (15) are designed to realize a progressive spring arrangement and/or spring characteristic curve, wherein, with increasing spring loading proceeding from an unloaded state of the leaf spring device (1), the elastic material (15) is increasingly deformed and/or compressed, and the further spring leaf (3) is increasingly loaded as a result.

5. Leaf spring device according to any of the preceding claims, **characterized in that** the further spring leaf (3) and/or an elastic material (15) is arranged entirely within the first spring leaf (2), and in particular the receiving space (4) is formed as a cavity in the first spring leaf (2), and preferably the further spring leaf (3) and/or the elastic material (15) is completely surrounded by the first spring leaf (2).

6. Leaf spring device according to any of the preceding claims, **characterized in that** the receiving space (4) extends as a passage opening from a first side (5) of the first spring leaf (2) to a second side (6), averted from the first side (5), of the first spring leaf (2), and in particular the receiving space (4) extends transversely or at right angles with respect to a vehicle vertical axis when the leaf spring device (1) is in an installed state in the vehicle.

7. Leaf spring device according to any of the preceding claims, **characterized in that** the first spring leaf (2) and/or the further spring leaf (3) is of mirrorsymmetrical form with respect to a central plane (9), and preferably the central plane (9) extends parallel or at right angles with respect to a longitudinal axis of the leaf spring device (1), and in particular the longitudinal axis of the leaf spring device (1) runs through two mutually averted end-side fastening devices for the fastening of the leaf spring device (1) to a vehicle member and/or vehicle structure.

8. Leaf spring device according to any of the preceding claims, **characterized in that** the first spring leaf (2), the further spring leaf (3) and/or the receiving space (4) has an arcuate or curved design in particular when the leaf spring device (1) is in an unloaded state.

9. Leaf spring device according to any of the preceding claims, **characterized in that** the receiving space (4), in particular in an unloaded state of the leaf spring device (1), has a convexly curved inner side (18) and a concavely curved inner side (19), wherein the convexly curved inner side (18) and the concavely curved inner side (19) extend in a longitudinal direction of the first spring leaf (2), and preferably the convexly curved inner side (18) and the concavely curved inner side (19) are arranged opposite one another and/or so as to face one another.

10. Leaf spring device according to Claim 9, **characterized in that** two mutually averted end regions (12, 13) of the further spring leaf (3) are arranged with a smaller spacing to the concavely curved inner side (19) than to the convexly curved inner side (18), in particular when the leaf spring device (1) is in an unloaded state, and preferably a first end region (12) of the further spring leaf (3) faces towards a first end (7) of the first spring leaf (2) and a second end region (13) of the further spring leaf (3) faces towards a second end (8) of the first spring leaf (2).

11. Leaf spring device according to Claim 9 or 10, **characterized in that** a central region (14) of the further spring leaf (3) is arranged with a smaller spacing to the convexly curved inner side (18) than to the concavely curved inner side (19), in particular when the leaf spring device (1) is in an unloaded state, and preferably the central region (14) is arranged centrally between two end regions (12, 13) of the further spring leaf (3).

12. Method for producing a leaf spring device according to any of the preceding claims, wherein a first spring leaf (2) and at least one further spring leaf (3) are produced, the first spring leaf (2) and the further spring leaf (3) interact in order to realize a progressive spring arrangement and/or spring characteristic curve, and the first spring leaf (2) has a receiving space (4) and the further spring leaf (3) is arranged in the receiving space (4), wherein an elastic material (15) is arranged in the receiving space and between the first spring leaf (2) and the further spring leaf (3).

13. Method according to Claim 12, **characterized in that** the first spring leaf (2), the further spring leaf (3) and the elastic material (15) are produced in the manner of plies and/or in the manner of layers, and preferably the leaf spring device (1) is constructed and/or produced in the manner of layers and/or in the manner of plies.

14. Use of a leaf spring device (1) according to any of Claims 1 to 11 as a longitudinal leaf spring or a transverse leaf spring in a chassis of a vehicle or motor vehicle.

## Revendications

1. Dispositif de ressort à lame pour un véhicule, comprenant une première lame de ressort (2) et au moins une lame de ressort supplémentaire (3), la première lame de ressort (2) et la lame de ressort supplémentaire (3) coopérant pour réaliser une suspension à ressort progressive, la première lame de ressort (2) présentant un espace de réception (4) et la lame de ressort supplémentaire (3) étant disposée dans l'espace de réception (4), **caractérisé en ce qu'**un matériau élastique (15) est disposé dans l'espace de réception (4) et entre la première lame de ressort (2) et la lame de ressort supplémentaire (3).

2. Dispositif de ressort à lame selon la revendication 1, **caractérisé en ce que** le matériau élastique (15) s'applique d'une part contre une périphérie intérieure (16) de l'espace de réception (4) et d'autre part contre une périphérie extérieure (17) de la lame de ressort supplémentaire (3).

3. Dispositif de ressort à lame selon l'une quelconque des revendications 1 et 2, **caractérisé en ce que** la première lame de ressort (2) et/ou la lame de ressort supplémentaire (3) sont formées d'un plastique renforcé par des fibres, en particulier, la première lame de ressort (2) est formée d'un premier plastique renforcé par des fibres et la lame de ressort supplémentaire (3) est formée d'un plastique renforcé par des fibres supplémentaire différent du premier plastique renforcé par des fibres, de préférence le premier plastique renforcé par des fibres, le plastique renforcé par des fibres supplémentaire et/ou un matériau élastique sont réalisés et/ou sélectionnés de manière ajustée les uns aux autres pour réaliser une caractéristique de ressort prédéfinie.

4. Dispositif de ressort à lame selon la revendication 2 ou 3, **caractérisé en ce que** la première lame de ressort (2), la lame de ressort supplémentaire (3) et le matériau élastique (15) sont réalisés de manière à obtenir une suspension à ressort progressive et/ou une caractéristique de ressort progressive, le matériau élastique (15), à partir d'un état non sollicité du dispositif de ressort à lame (1), se déformant et/ou étant comprimé de manière croissante avec l'augmentation de la charge du ressort et la lame de ressort supplémentaire (3) étant de ce fait sollicitée de manière croissante.

5. Dispositif de ressort à lame selon l'une quelconque des revendications précédentes, **caractérisé en ce que** la lame de ressort supplémentaire (3) et/ou un matériau élastique (15) sont disposés complètement à l'intérieur de la première lame de ressort (2), en particulier, l'espace de réception (4) est réalisé sous forme de cavité dans la première lame de ressort (2), de préférence la lame de ressort supplémentaire (3) et/ou le matériau élastique (15) sont complètement entourés par la première lame de ressort (2).

6. Dispositif de ressort à lame selon l'une quelconque des revendications précédentes, **caractérisé en ce que** l'espace de réception (4), en tant qu'ouverture de passage, s'étend depuis un premier côté (5) de la première lame de ressort (2) jusqu'à un deuxième côté (6) de la première lame de ressort (2) opposé au premier côté (5), en particulier l'espace de réception (4), dans un état du dispositif de ressort à lame (1) monté dans le véhicule, s'étend transversalement ou à angle droit par rapport à un axe vertical du véhicule.

7. Dispositif de ressort à lame selon l'une quelconque des revendications précédentes, **caractérisé en ce que** la première lame de ressort (2) et/ou la lame de ressort supplémentaire (3) sont réalisées avec une symétrie spéculaire par rapport à un plan médian (9), de préférence le plan médian (9) s'étend parallèlement ou à angle droit par rapport à un axe longitudinal du dispositif de ressort à lame (1), en particulier l'axe longitudinal du dispositif de ressort à lame (1) s'étend à travers deux dispositifs de fixation terminaux opposés l'un à l'autre pour fixer le dispositif de ressort à lame (1) à un support du véhicule et/ou à une carrosserie du véhicule.

8. Dispositif de ressort à lame selon l'une quelconque des revendications précédentes, **caractérisé en ce que** la première lame de ressort (2), la lame de ressort supplémentaire (3) et/ou l'espace de réception (4), en particulier dans un état non sollicité du dispositif de ressort à lame (1), présentent une configuration courbe ou cintrée.

9. Dispositif de ressort à lame selon l'une quelconque des revendications précédentes, **caractérisé en ce que** l'espace de réception (4), en particulier dans un état non sollicité du dispositif de ressort (1), présente un côté intérieur de courbure convexe (18) et un côté intérieur de courbure concave (19), le côté intérieur de courbure convexe (18) et le côté intérieur de courbure concave (19) s'étendant dans la direction longitudinale de la première lame de ressort (2), de préférence le côté intérieur de courbure convexe (18) et le côté intérieur de courbure concave (19) étant disposés à l'opposé l'un de l'autre et/ou en regard l'un de l'autre.

10. Dispositif de ressort à lame selon la revendication 9, **caractérisé en ce que** deux régions d'extrémité opposées l'une à l'autre (12, 13) de la lame de ressort supplémentaire (3), en particulier dans un état non sollicité du dispositif de ressort à lame (1), sont disposées à plus faible distance du côté intérieur de courbure concave (19) que du côté intérieur de courbure convexe (18), de préférence une première région d'extrémité (12) de la lame de ressort supplémentaire (3) est tournée vers une première extrémité (7) de la première lame de ressort (2) et une deuxième région d'extrémité (13) de la lame de ressort supplémentaire (3) est tournée vers une deuxième extrémité (8) de la première lame de ressort (2).

11. Dispositif de ressort à lame selon la revendication 9 ou 10, **caractérisé en ce qu'**une région centrale (14) de la lame de ressort supplémentaire (3), en particulier dans un état non sollicité du dispositif de ressort à lame (1), est disposée à plus faible distance du côté intérieur de courbure convexe (18) que du côté intérieur de courbure concave (19), de préférence la région centrale (14) est disposée au centre entre deux régions d'extrémité (12, 13) de la lame de ressort supplémentaire (3).

12. Procédé de fabrication d'un dispositif de ressort à lame selon l'une quelconque des revendications précédentes, dans lequel une première lame de ressort (2) et au moins une lame de ressort supplémentaire (3) sont fabriquées, la première lame de ressort (2) et la lame de ressort supplémentaire (3) coopèrent pour obtenir une suspension à ressort progressive et/ou une caractéristique de ressort progressive, et la première lame de ressort (2) présente un espace de réception (4) et la lame de ressort supplémentaire (3) est disposée dans l'espace de réception (4), un matériau élastique (15) étant disposé dans l'espace de réception et entre la première lame de ressort (2) et la lame de ressort supplémentaire (3) .

13. Procédé selon la revendication 12, **caractérisé en ce que** la première lame de ressort (2), la lame de ressort supplémentaire (3) et le matériau élastique (15) sont fabriqués sous forme de couches et/ou sous forme de strates, de préférence le dispositif de ressort à lame (1) étant construit et/ou fabriqué sous forme de strates et/ou sous forme de couches.

14. Utilisation d'un dispositif de ressort à lame (1) selon l'une quelconque des revendications 1 à 11, en tant que ressort à lame longitudinal ou en tant que ressort à lame transversal dans un châssis d'un véhicule ou d'un véhicule automobile.
